# EUROPEAN PATENT APPLICATION

(11) **EP 2 704 481 A1**
(43) Date of publication of application: **05.03.2014**
(21) Application number: 12793256.4
(22) Date of filing: 28.05.2012
(51) Int. Cl.: H04W 28/04, H04W 28/10

(54) **DATA STREAM TRANSMISSION METHOD, AND RELEVANT DEVICE AND SYSTEM**

(30) Priority: 27.05.2011 CN 201110141992
(71) Applicant: Huawei Technologies Co., Ltd, Shenzhen, Guangdong 518129 (CN)
(72) Inventor: LI, Jiang, Shenzhen Guangdong 518129 (CN); HUANG, Min, Shenzhen Guangdong 518129 (CN); MA, Ni, Shenzhen Guangdong 518129 (CN); LI, Yongmao, Shenzhen Guangdong 518129 (CN); XIA, Bin, Shenzhen Guangdong 518129 (CN); LU, Jianmin, Shenzhen Guangdong 518129 (CN); ZHANG, Yi, Shenzhen Guangdong 518129 (CN)
(74) Representative: Epping - Hermann - Fischer
(86) International application number: PCT/CN2012/076150
(87) International publication number: WO 2012/163260

(57) **Abstract**

Embodiments of the present invention relate to the field of communications technologies, and disclose a data stream transmission method, and a related device and system. The data stream transmission method includes: A user equipment establishes a first network link and a second network link with a network side, where the first network is different from the second network; the user equipment associates the first network link with the second network link; and the user equipment distributes, according a scheduling algorithm, a same data stream to the first network link and the second network link for transmission. In the embodiments of the present invention, hybrid transmission of a same data stream may be implemented in different networks. Compared with an existing solution, in the embodiments of the present invention, distribution may be performed more flexibly, and a quality of service assurance may be improved.

## Description

This application claims priority to Chinese Patent Application No. 201110141992.6, filed on May 27, 2011 and entitled "DATA STREAM TRANSMISSION METHOD AND RELATED DEVICE AND SYSTEM", which is incorporated herein by reference in its entirety.

### TECHNICAL FIELD

The present invention relates to the field of communications technologies, and in particular to a data stream transmission method, and a related device and system.

### BACKGROUND

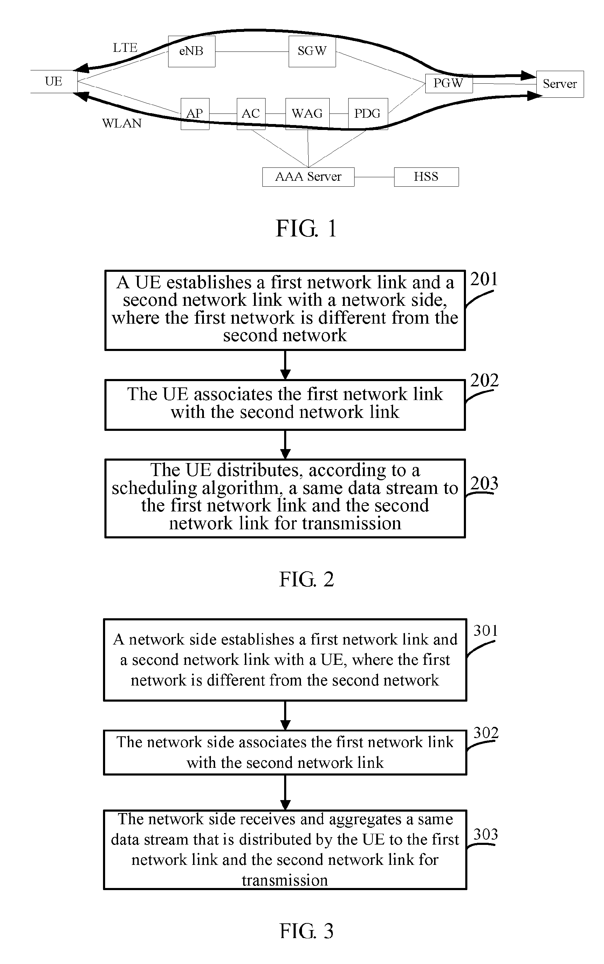

A method for performing data stream hybrid transmission by using a wireless local area network (Wireless Local Area Networks, WLAN) and a long term evolution (Long Term Evolution, LTE) network is proposed in an existing 3rd generation partnership project (The 3rd Generation Partnership Project, 3GPP) technology to improve a throughput rate of an air interface. For implementation of the method, reference may be made to a system shown in FIG. 1. A specific process is as follows:
First, construct an LTE network and a WLAN separately. The following network elements are mainly included: a base station (eNB), a serving gateway (Serving Gateway, SGW), an access point (Access Point, AP), an access controller (Access Controller, AC), a WLAN access gateway (WLAN Access Gateway, WAG), a packet data gateway (Packet Data Gateway, PDG), an authentication, authorization, and accounting (AAA) server, a home subscriber server (Home Subscriber Server, HSS), a packet data network gateway (PDN Gateway, PGW), and so on.
Second, a user equipment (User Equipment, UE) accesses the LTE network and the WLAN network. The access of the UE to the LTE network is independent of that to the WLAN network. That is, the UE may access the LTE network first regardless of whether the WLAN exists, and may also access the WLAN first regardless of whether the LTE network exists. Data streams transmitted in the WLAN and the LTE network all go out via the PGW That is to say, the PGW serves as an anchor (Anchor) node.
Third, when the data stream hybrid transmission is performed by using the WLAN and the LTE network, transmit one part of data streams in the LTE network and the other part of data streams in the WLAN to perform a distribution function and achieve an objective of improving the throughput rate of the air interface.

In the foregoing method, a certain determined data stream is transmitted either in the LTE network or the WLAN network, which causes that distribution is not flexible. In addition, because a certain determined data stream can be transmitted only in a certain network, if a packet of the data stream is lost, no recovery mechanism is provided, so that quality of service cannot be ensured.

### SUMMARY

In view of the foregoing disadvantages, embodiments of the present invention provide a data stream transmission method, and a related device and system, which are used to perform data stream hybrid transmission in different networks. Compared with an existing solution, in the embodiments of the present invention, distribution may be performed more flexibly, and a quality of service assurance may be improved.

In one aspect, a data stream transmission method is provided, including:
establishing, by a user equipment, a first network link and a second network link with a network side, where the first network is different from the second network;
associating, by the user equipment, the first network link with the second network link; and
distributing, by the user equipment and according to a scheduling algorithm, a same data stream to the first network link and the second network link for transmission.

In another aspect, another data stream transmission method is provided, including:
establishing a first network link and a second network link with a user equipment, where the first network is different from the second network;
associating the first network link with the second network link; and
receiving and aggregating a same data stream that is distributed by the user equipment to the first network link and the second network link for transmission.

Accordingly, in one aspect, a user equipment is provided, including:
a first link unit, configured to establish a first network link with a network side;
a second link unit, configured to establish a second network link with the base station, where the first network is different from the second network;
an association unit, configured to associate the first network link with the second network link; and
a processing unit, configured to distribute, according to a scheduling algorithm, a same data stream to the first network link and the second network link for transmission.

Accordingly, in another aspect, a network device is provided, including:
a first link unit, configured to establish a first network link with a user equipment;
a second link unit, configured to establish a second network link with the user equipment, where the first network is different from the second network;
an association unit, configured to associate the first network link with the second network link; and
a processing unit, configured to receive and aggregate a same data stream that is distributed by the user equipment to the first network link and the second network link for transmission.

Accordingly, a user data transmission system includes the user equipment and the network device.

In the embodiments of the present invention, a first network link and a second network link may be established between a user equipment and a network side, where the first network is different from the second network; and the first network link is associated with the second network link, and further, the user equipment is capable of distributing, according to a scheduling algorithm, a same data stream to the first network link and the second network link for transmission. In the embodiments of the present invention, hybrid transmission of a same data stream may be implemented in different networks. Compared an existing solution, in the embodiments of the present invention, distribution may be performed more flexibly, and particularly, when a load of a certain network link is relatively high or many packets are lost in a certain network link, a same data stream may be distributed to another network link for transmission. In addition, in the embodiments of the present invention, when a packet is lost in a certain network link, another network link may also be used for retransmission, thereby greatly improving a quality of service assurance.

### BRIEF DESCRIPTION OF DRAWINGS

To illustrate the technical solutions in the embodiments of the present invention or in the prior art more clearly, the following briefly introduces accompanying drawings required for describing the embodiments or the prior art.
FIG. 1 is a schematic diagram of a system for performing data stream hybrid transmission by using a WLAN and an LTE network;
FIG. 2 is a schematic flow chart of a data stream transmission method according to an embodiment of the present invention;
FIG. 3 is a schematic flow chart of another data stream transmission method according to an embodiment of the present invention;
FIG. 4 is a schematic diagram of distributing a data stream at a MAC layer according to an embodiment of the present invention;
FIG. 5 is a schematic diagram of distributing a data stream at an IP layer according to an embodiment of the present invention;
FIG. 6 is a schematic diagram of encapsulating a data packet in an LLC layer according to an embodiment of the present invention;
FIG. 7 is a schematic flow chart of scheduling policy negotiation according to an embodiment of the present invention;
FIG. 8 is a schematic diagram of a network scenario according to an embodiment of the present invention;
FIG. 9 is a schematic diagram of another network scenario according to an embodiment of the present invention;
FIG. 10 is a schematic structural diagram of a user equipment according to an embodiment of the present invention;
FIG. 11 is a schematic structural diagram of a network device according to an embodiment of the present invention; and
FIG. 12 is a schematic structural diagram of a data stream transmission system according to an embodiment of the present invention.

### DESCRIPTION OF EMBODIMENTS

The following clearly describes the technical solutions in the embodiments of the present invention with reference to the accompanying drawings in the embodiments of the present invention. Apparently, the embodiments to be described are merely part rather than all of the embodiments of the present invention. All other embodiments obtained by persons of ordinary skill in the art based on the embodiments of the present invention without creative efforts shall fall within the protection scope of the present invention.

The embodiments of the present invention provide a data stream transmission method, and a related device and system, so that data stream hybrid transmission may be performed in different networks. Compared with an existing solution, in the embodiments of the present invention, distribution may be performed more flexibly, and a quality of service assurance may be improved. The following provides detailed description separately.

In the embodiments of the present invention, a system for performing data stream hybrid transmission with a WLAN on an air interface may be an existing 3GPP communications system with any standard, for example, a global system for mobile communications (Global System of Mobile communication, GSM) and a universal mobile telecommunications system (Universal Mobile Telecommunications System, UMTS), and may also be a future communications system. When different communications systems perform data stream hybrid transmission with the WLAN, functions and names of network nodes adopted by different communications systems are different, therefore, names of network nodes that perform distribution on the air interface correspond to communications systems with different standards, and different anchor nodes may be selected. In a specific embodiment of the present invention, an LTE network is taken as an example for describing a data stream transmission method. The method may also apply to another communications system described above.

Referring to FIG. 2, FIG. 2 is a schematic flow chart of a data stream transmission method according to an embodiment of the present invention. The method may include the following steps:
201. An UE establishes a first network link and a second network link with a network side, where the first network is different from the second network.

For example, in this embodiment of the present invention, the first network may be a WLAN, and the second network may be an LTE network.

A specific implementation method for establishing a WLAN link and an LTE link between the UE and the network side is common knowledge for persons skilled in the art, and is not described in detail here in this embodiment of the present invention.
202. The UE associates the first network link with the second network link.

In this embodiment of the present invention, the associating, by the UE, the first network link with the second network link refers to establishing, by the UE, correspondence between the first network link and the second network link. It should be understood that the correspondence may be one-to-one correspondence between the first network link and the second network link, or a matching relationship between the first network link and the second network link.

For example, if the first network is the WLAN, and the second network is the LTE network, an implementation manner for the UE to associate the first network link with the second network link may be:
The UE associates the first network link with the second network link according to a wireless local area network media access control address (WLAN MAC Address) that corresponds to the first network link and a cell radio network temporary identifier (Cell Radio Network Temporary Identifier, C-RNTI) and a cell identifier (Cell ID) that correspond to the second network link, that is, establishes correspondence between the first network link and the second network link. A manner for the UE to establish the correspondence between the first network link and the second network link may be establishing a relationship between the wireless local area network media access control address that corresponds to the first network link and the C-RNTI and the Cell ID that correspond to the second network link. That is to say, the wireless local area network media access control address of the first network link corresponds to the C-RNTI and the Cell ID of the second network link.

In the WLAN, a WLAN MAC Address may be used to identify one WLAN link, while in the LTE network, a C-RNTI and a Cell ID may be used to identify one LTE link. The C-RNTI and the Cell ID are allocated when the LTE link is established between the UE and the network side. The WLAN MAC Address may be preconfigured by the UE.

For example, if the first network is the WLAN, and the second network is the LTE network, the implementation manner for the UE to associate the first network link with the second network link may also be:
The UE associates the first network link with the second network link according to a user ID that corresponds to the first network link and a user ID that corresponds to the second network link, that is, establishes correspondence between the first network link and the second network link. The manner for the UE to establish the correspondence between the first network link and the second network link may be that the UE stores the user ID that corresponds to the first network link and the user ID that corresponds to the second network link, where the user ID that corresponds to the first network link is the same as the user ID that corresponds to the second network link.

In this embodiment of the present invention, a unified user ID, for example, an international mobile subscriber identification number (International Mobile Subscriber Identification Number, IMSI) of a user, may be determined, and this user ID may be used to identify a user in both the WLAN and the LTE network.
203. The UE distributes, according to a scheduling algorithm, a same data stream to the first network link and the second network link for transmission.

As an optional implementation manner, the distributing, by the UE and according to the scheduling algorithm, the same data stream to the first network link and the second network link may be performed at a media access control (Media Access Control, MAC) layer. This manner of performing distribution at the MAC layer is subsequently described in detail in the present invention.

As another optional implementation manner, the distributing, by the UE and according to the scheduling algorithm, the same data stream to the first network link and the second network link may be performed at an Internet protocol (Internet Protocol, IP) layer. This manner of performing distribution at the IP layer is subsequently described in detail in the present invention.

In this embodiment of the present invention, there may be various kinds of scheduling algorithms, which are described subsequently with reference to specific examples in the embodiments of the present invention.

As an optional implementation manner, after distributing the same data stream at the IP layer, the UE may mark each IP data packet with a sequence number (Serial Number, SN), so that after receiving an IP data packet, the network side is capable of performing sequencing according to an SN of the IP data packet, thereby avoiding a problem of disorder caused by separately transmitting an IP data packet on an LTE link and a WLAN link.

As an optional implementation manner, in this embodiment of the present invention, the UE may negotiate a scheduling policy with the network side (for example, a base station eNB). Accordingly, in step 203, the UE may distribute, according to a negotiation result and the scheduling algorithm, the same data stream to the first network link and the second network link for transmission.

In this embodiment of the present invention, it is taken into consideration that the network side has more detailed information. Therefore, the network side (for example, the eNB) may formulate the scheduling policy. The network side sends the formulated scheduling policy to the UE. After receiving a confirmation message (Confirm) sent by the UE, the network side may determine that the scheduling policy is successfully negotiated with the UE. A specific process of negotiating the scheduling policy may be:
A. The UE sends a scheduling policy negotiation request message to the network side (for example, the eNB).
B. The UE receives a policy command returned by the network side, where the policy command carries the scheduling policy.
C. The UE acquires the scheduling policy, and sends a scheduling policy negotiation confirmation message to the network side.

Certainly, in this embodiment of the present invention, the UE may formulate the scheduling policy, and send it to the network side, which is not limited in this embodiment of the present invention.

In this embodiment of the present invention, a first network link and a second network link may be established between a UE and a network side, where the first network is different from the second network; and the first network link is associated with the second network link, and further, the UE is capable of distributing, according to a negotiation result and a scheduling algorithm, a same data stream to the first network link and the second network link for transmission. In this embodiment of the present invention, hybrid transmission of a same data stream may be implemented in different networks. Compared with an existing solution, in this embodiment of the present invention, distribution may be performed more flexibly, and particularly, when a load of a certain network link is relatively high or many packets are lost in a certain network link, a same data stream may be distributed to another network link for transmission. In addition, in this embodiment of the present invention, when a packet is lost in a certain network link, another network link may also be used for retransmission, thereby greatly improving a quality of service assurance.

Referring to FIG. 3, FIG. 3 is a schematic flow chart of another data stream transmission method according to an embodiment of the present invention. The method may include the following steps:
301. A network side establishes a first network link and a second network link with a UE, where the first network is different from the second network.

Similarly, in the method illustrated in FIG. 3, the first network may be a WLAN, and the second network may be an LTE network.
302. The network side associates the first network link with the second network link.

For example, if the first network is the WLAN, and the second network is the LTE network, an implementation manner for an eNB to associate the first network link with the second network link may be:
The network side (for example, the eNB) associates the first network link with the second network link according to a WLAN MAC Address that corresponds to the first network link and a C-RNTI and a cell identifier that correspond to the second network link, that is, establishes correspondence between the first network link and the second network link. A manner for the network side (for example, the eNB) to establish the correspondence between the first network link and the second network link may be establishing a relationship between the wireless local area network media access control address that corresponds to the first network link and the C-RNTI and the Cell ID that correspond to the second network link. That is to say, the wireless local area network media access control address of the first network link corresponds to the C-RNTI and the Cell ID of the second network link.

In the WLAN, a WLAN MAC Address may be used to identify one WLAN link, while in the LTE network, a C-RNTI and a Cell ID may be used to identify one LTE link. The C-RNTI and the Cell ID are allocated when the LTE link is established between the UE and the network side. The WLAN MAC Address may be preconfigured by the UE and notified to the network side.

For example, if the first network is the WLAN, and the second network is the LTE network, the implementation manner for the network side to associate the first network link with the second network link may also be:
The network side (for example, the eNB) associates the first network link with the second network link according to a user ID that corresponds to the first network link and a user ID that corresponds to the second network link, that is, establishes correspondence between the first network link and the second network link. The manner for the network side (for example, the eNB) to establish the correspondence between the first network link and the second network link may be that the network side (for example, the eNB) stores the user ID that corresponds to the first network link and the user ID that corresponds to the second network link, where the user ID that corresponds to the first network link is the same as the user ID that corresponds to the second network link.
   303. The network side receives and aggregates a same data stream that is distributed by the UE to the first network link and the second network link for transmission.

As an optional implementation manner, in this embodiment of the present invention, the network side (for example, the eNB) may negotiate a scheduling policy with the UE. A specific implementation process for the network side (for example, the eNB) and the UE to negotiate the scheduling policy has been described in detail in the foregoing, which is not repeatedly described in this embodiment of the present invention.

In this embodiment of the present invention, hybrid transmission of a same data stream may be implemented in different networks. Compared with an existing solution, in this embodiment of the present invention, distribution may be performed more flexibly, and particularly, when a load of a certain network link is relatively high or many packets are lost in a certain network link, a same data stream may be distributed to another network link for transmission. In addition, in this embodiment of the present invention, when a packet is lost in a certain network link, another network link may also be used for retransmission, thereby greatly improving a quality of service assurance.

A data stream transmission method provided in an embodiment of the present invention is described in detail below by taking that a first network link is a WLAN link and a second network link is an LTE link as an example. In the embodiment of the present invention, a process for a UE to establish a WLAN link and an LTE link with a network side (for example, an eNB) may include authentication performed on the UE in a WLAN and an LTE network. The following provides detailed description separately.

### Embodiment 1: First method for performing authentication on an UE in a WLAN

In this embodiment of the present invention, there are mainly two objectives for performing authentication on the UE in the WLAN:
1. Identify a user identity and prevent an unauthorized user from accessing; and
2. after a user identity is identified, a link in the WLAN and a link in an LTE network of a same user may be associated.

The method for performing authentication on the UE in the WLAN provided in Embodiment 1 is described as follows:
1) If considering that authentication is required, a network side (for example, an eNB) may initiate an authentication command (Authentication Command) to the UE to trigger a process of performing authentication on the UE;
2) the UE initiates an authentication request (Authentication Request) to the network side (for example, the eNB) in the WLAN, where the authentication request carries a C-RNTI and a Cell ID of the UE to identify the UE;
3) after receiving the authentication request, the network side (for example, the eNB) searches for the UE according to the C-RNTI and the Cell ID that are carried in the authentication request, generates a random number Rand, and sends the random number Rand to the UE in a Challenge Request message;
4) after receiving the random number Rand sent by the network side (for example, the eNB), the UE generates a reference value RES by using a 3GPP algorithm and according to a pre-shared key KeNB shared with the network side (for example, the eNB) and the random number Rand, and sends the reference value RES to the network side (for example, the eNB) in a Challenge Response message. The network side (for example, the eNB) also generates a reference value XRES according to its stored KeNB and the random number Rand. Then the network side (for example, the eNB) compares the RES with the XRES. If the two are equal, it indicates that the authentication is successful; otherwise, it indicates that the authentication fails;
5) the network side (for example, the eNB) sends an authentication result to the UE in an authentication response message (Authentication Response); and
6) if the authentication is successful, a WLAN link may be established between the UE and the network side (for example, the eNB). The UE and the network side (for example, the eNB) may separately associate the WLAN link with an LTE link according to the C-RNTI, the Cell ID, and a WLAN MAC Address of the WLAN link, so that a process of negotiating a scheduling policy and a process of data stream distribution are subsequently started.

The C-RNTI and the Cell ID are allocated when the LTE link is established between the UE and the network side (for example, the eNB). In Embodiment 1, the LTE link needs to be established between the UE and the network side (for example, the eNB) first, then the WLAN link is established, because parameters, the C-RNTI and the Cell ID, can be learned only after the LTE link is established. A specific implementation method for establishing the LTE link between the UE and the network side (for example, the eNB) is common knowledge for persons skilled in the art, and is not described in detail here in Embodiment 1.

In Embodiment 1, the procedure of performing authentication on the UE in the WLAN is fast and is performed locally. Compared with a web portal (Web Portal) method and so on, the authentication method in Embodiment 1 is transparent to a user, thereby providing good user experience. In addition, network construction is simple, no additional construction cost is required, and no requirement is imposed on an existing 3GPP standard.

In this embodiment of the present invention, authentication may also be performed on the UE in the LTE network. After the authentication, the link in the WLAN and the link in the LTE network of the same user are associated. A process of performing authentication on the UE in the LTE network is similar to that in the WLAN, and is not repeatedly described here in this embodiment of the present invention and in the following.

### Embodiment 2: Second method for performing authentication on an UE in a WLAN

In Embodiment 2, a method for performing authentication on the UE in the WLAN may adopt an existing 802.1x authentication method in the WLAN, where the authentication method is based on EAP-AKA, which is not described in detail in Embodiment 2.

A method for performing authentication on the UE in an LTE network is similar to and independent of the method for performing authentication on the UE in the WLAN in Embodiment 2. Therefore, after a WLAN link and an LTE link are established between the UE and a network side, the WLAN link may be associated with the LTE link in the following manner:
1) Determine a unified user ID, for example, an IMSI of a user, where the user ID may be used to identify a user in both the WLAN and the LTE network;
2) a process of performing authentication on the UE in the WLAN is independent of that in the LTE network. However, after the authentication is successful and the WLAN link is established, the user ID needs to be stored in the network side (for example, an eNB);
3) a process of performing authentication on the UE in the LTE network is also independent of that in the WLAN. However, after the authentication is successful and the LTE link is established, the user ID also needs to be stored in the network side (for example, the eNB);
   in this embodiment, the WLAN link and the LTE link may be regarded as two radio access technologies (Radio access technology, RAT). User IDs stored by the two RATs in the network side (for example, the eNB) are a same user ID; and
4) regardless of whether the UE establishes the WLAN link in the WLAN or establishes the LTE link in the LTE network, the UE and the network side (for example, the eNB) may perform scanning according to the user ID in the process to determine whether the UE has another RAT connection. If yes, the UE and the network side (for example, the eNB) may associate the WLAN link and the LTE link according to the user ID that corresponds to the WLAN link and the user ID that corresponds to the LTE link, so that a process of negotiating a scheduling policy and a process of data stream distribution are subsequently started.

In Embodiment 2, the user ID used in the WLAN and the LTE network is an IMSI. Certainly, another ID may also be defined, which is not limited in this embodiment of the present invention.

In Embodiment 2, the method for performing authentication on the UE in the WLAN is completely compatible with an existing subscriber identity module (Subscriber Identity Module, SIM) authentication process. Therefore, the authentication process does not need to be changed.

### Embodiment 3: Third method for performing authentication on a UE in a WLAN

In Embodiment 3, authentication performed on the UE in the WLAN is implemented by using an authentication process in an LTE network on condition that a WLAN module and an LTE module of the UE cannot be separated. A specific method is as follows:
1) The UE reports, in the LTE network, whether the WLAN is supported and a WLAN MAC Address. This WLAN information may be sent to a network side (for example, an eNB) by using a Radio Capabilities procedure, or sent to a network side (for example, an eNB) by using any other feasible LTE Procedure;
2) when the UE establishes an LTE link, the network side (for example, the eNB) may acquire a capability of the UE for supporting a WLAN and the WLAN MAC Address via the LTE network, scan an existing WLAN link according to the WLAN MAC Address, and if finding a corresponding WLAN link, associate the WLAN link with the LTE link, so that a process of negotiating a scheduling policy and a process of data stream distribution are subsequently started;
3) when the UE establishes a WLAN link, the network side (for example, the eNB) acquires a WLAN MAC Address through a WLAN air interface, scans an existing LTE link according to the WLAN MAC Address, and if finding a corresponding LTE link, associates the WLAN link with the LTE link, so that a process of negotiating a scheduling policy and a process of data stream distribution are subsequently started; and
4) the WLAN module and the LTE module in the UE cannot be separated, which means that the authentication performed on the UE in the LTE network also applies to the WLAN, and therefore, when the UE accesses the WLAN again, no authentication is required.

In Embodiment 3, when the UE accesses the WLAN, no authentication is required. This simplifies and accelerates the access without any impact on an existing WLAN authentication process. In this case, when the UE moves to another WLAN, corresponding SIM authentication or Web Portal authentication may still be used for access.

If security in the WLAN is insufficient (because no authentication is performed in the WLAN) in Embodiment 3, an authentication procedure in the WLAN may be added to the foregoing steps, and is specifically as follows:
1) The UE reports, in the LTE network, whether the WLAN is supported and a WLAN MAC Address. This WLAN information may be sent to a network side (for example, an eNB) by using a Radio Capabilities procedure, or sent to a network side (for example, an eNB) by using any other feasible LTE Procedure;
2) when the UE establishes an LTE link, the network side (for example, the eNB) may acquire a capability of the UE for supporting a WLAN and the WLAN MAC Address via the LTE network, scan an existing WLAN link according to the WLAN MAC Address, and if finding a corresponding WLAN link, associate the WLAN link with the LTE link according to a C-RNTI, a Cell ID, and the WLAN MAC Address, so that a process of negotiating a scheduling policy and a process of data stream distribution are subsequently started;
3) when the UE establishes a WLAN link, authentication is performed. The authentication process is independent of the LTE network authentication, and may adopt an existing authentication process, for example, the SIM authentication or the Web Portal. The network side (for example, the eNB) records the WLAN MAC Address of the WLAN link, scans an existing LTE link according to the WLAN MAC Address, and if finding a corresponding LTE link, associates the WLAN link with the LTE link, so that a process of negotiating a scheduling policy and a process of data stream distribution are subsequently started; and
4) in the foregoing process, the WLAN link is associated with the LTE link according to the MAC Address of the WLAN link. The WLAN link may also be associated with the LTE link by using any other defined parameter, which is not limited in this embodiment.

### Embodiment 4: Fourth method for performing authentication on a UE in a WLAN

The method in Embodiment 4 is performing authentication the UE in the WLAN and an LTE network in an existing method, and notifying an eNB to associate an LTE link and a WLAN link after the authentication is successful and links are established. A specific method is as follows:
1) Access and authentication of the UE in the LTE network is performed separately from and is transparent to that in the WLAN; and
2) for the UE, the UE has learned conditions of the accessed LTE network and WLAN. Therefore, after establishing the LTE link and the WLAN link and associating the two links, the UE may send a procedure message for associating the LTE link and the WLAN link to a network side (for example, the eNB) via the WLAN. The network side (for example, the eNB) may associate the WLAN link with the LTE link by using the procedure message, and subsequently start a process of negotiating a scheduling policy and a process of data stream distribution.

In Embodiment 4, information about the network side (for example, the eNB) may be added in an ESSID of the WLAN to help the UE identify a WLAN link which may be associated with the LTE link. In Embodiment 4, no modification needs to be made to an 3GPP standard.

The foregoing provides multiple methods for performing authentication on a UE in a WLAN with respective advantages and disadvantages. Which method is specifically used depends on multiple factors, for example, possibility of standardization and an impact on implementation in the UE.

In this embodiment of the present invention, after associating the WLAN link and the LTE link, the UE and the network side (for example, the eNB) may perform distribution on a same data stream. The following provides detailed description separately.

### Embodiment 5: First method of distribution on a WLAN link and an LTE link for a data stream

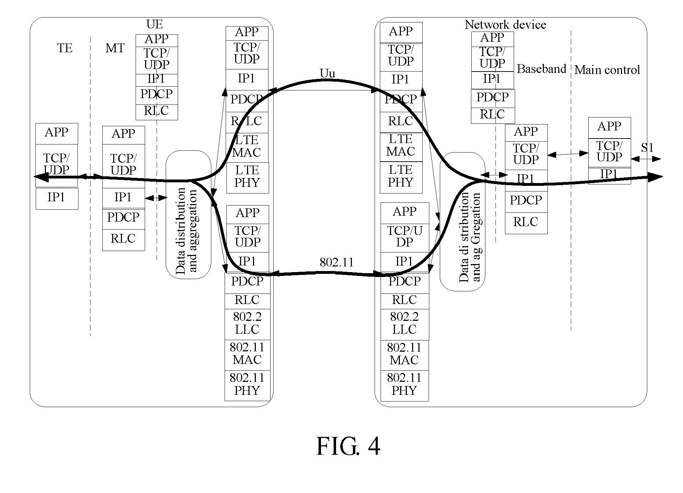

In Embodiment 5, a "data distribution/aggregation" module may be disposed in a UE and a network side (for example, an eNB) separately. An impact and an actual processing process of the module vary with its location. In Embodiment 5, the "data distribution/aggregation" modules disposed in the UE and the network side (for example, the eNB) may be located at a MAC layer, as shown in FIG. 4.

In an uplink direction, the "data distribution/aggregation" module disposed in the UE mainly functions to perform distribution on a data stream, while the "data distribution/aggregation" module disposed in the network side (for example, the eNB) mainly functions to aggregate the data stream. In a downlink direction, the "data distribution/aggregation" module disposed in the UE mainly functions to aggregate a data stream, while the "data distribution/aggregation" module disposed in the network side (for example, the eNB) mainly functions to perform distribution on the data stream.

It can be seen from FIG. 4 that, an LTE protocol stack is uniformly used above a radio link control (Radio Link Control, RLC) layer; and two RATs, LTE and WLAN, are obtained through classifying only below the RLC layer. Therefore, the "data distribution/aggregation" module may distribute, at the MAC layer, an RLC data packet to an LTE link and a WLAN link for transmission. The two RATs, LTE and WLAN, coexist and may work in load sharing mode or active/standby mode, thereby improving an air interface throughput rate of a system.

In Embodiment 5, a data packet distributed to the WLAN link has been processed at a packet data convergence protocol (Packet Data Convergence Protocol, PDCP) layer, which means that security protection has been achieved. Therefore, no additional security protection is required on the WLAN link. A data packet distributed to the WLAN link and the LTE link has been processed at the PDCP layer, which means that header compression has been performed and transmission rates of the WLAN link and the LTE link are improved. The data packet distributed to the WLAN link and the LTE link has been processed at the PDCP layer, which means that sequencing has been performed at the PDCP layer, and therefore, disorder is not caused and only a minor impact is caused on transmission at a transmission control protocol (Transmission Control Protocol, TCP) layer. Therefore, in Embodiment 5, a problem that an additional header overhead is increased and a processing workload is high due to security ensuring performed by IPSec between a UE and a PDG for a WLAN link in the prior art shown in FIG. 1 may be solved.

### Embodiment 6: Second method of distribution on a WLAN link and an LTE link for a data stream

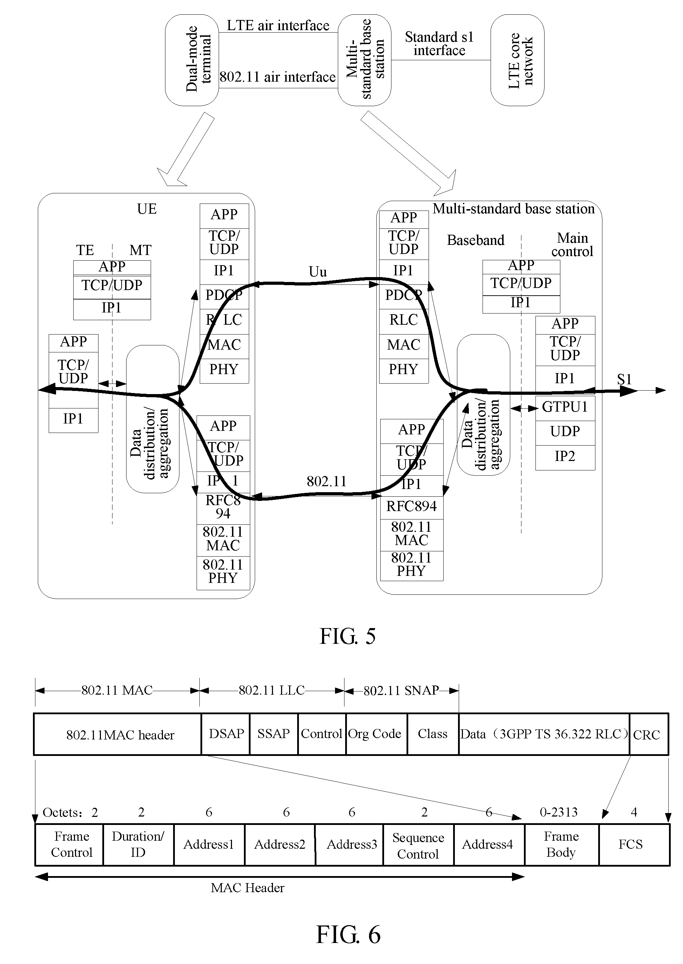

In Embodiment 6, "data distribution/aggregation" modules disposed in a UE and a network side (for example, an eNB) may be located at an IP layer, as shown in FIG. 5.

In embodiment 6, distribution for a same data stream is performed at the IP layer. That is, an object distributed by a "data distribution/aggregation" module to a WLAN link and an LTE link is an IP data packet.

In Embodiment 6, a lower-layer protocol stack does not need to be modified on the UE end, and data stream distribution/aggregation may be completed at an application layer. Therefore, a terminal is easily modified. Comparatively, in Embodiment 5, data stream distribution/aggregation are performed between a MAC layer and an RLC layer. Generally, a MAC layer and an RLC layer of a terminal are both implemented by using an ASIC chip, which is difficult to modify after mass production.

In Embodiment 5, a distributed data packet is processed at a PDCP layer, which means that security protection has been achieved. Therefore, no additional security protection is required on the WLAN link and the LTE link. However, in Embodiment 6, the object distributed to the WLAN link and the LTE link is the IP data packet, and the IP data packet is not processed at the PDCP layer. Therefore, additional security protection measures need to be added on the WLAN link and the LTE link. Certainly, if a security requirement is not high, security protection may also not be performed.

In Embodiment 5, the distributed data packet is processed at the PDCP layer, which means that header compression has been performed and transmission rates of the WLAN link and the LTE link are improved. However, in Embodiment 6, the object distributed to the WLAN link and the LTE link is the IP data packet, and the IP data packet is not processed at the PDCP layer, which means that header compression is not performed on the IP data packet, and transmission rates of the WLAN link and the LTE link are lower than those in Embodiment 5.

In Embodiment 5, the data packet distributed to the WLAN link and the LTE link has been processed at the PDCP layer, which means that sequencing has been performed at the PDCP layer. Therefore, disorder is not caused and only a minor impact is caused on transmission at a TCP layer. However, in Embodiment 6, a difference between a delay of the LTE link and that of the WLAN link may cause disorder, and the disorder may affect processing at the TCP layer.

### Embodiment 7: Data stream transmission in a WLAN

In this embodiment of the present invention, a data packet distributed to a WLAN link needs to be encapsulated in a logical link control (Logical Link Control, LLC) layer no matter whether the data packet is an RLC packet or an IP data packet, as shown in FIG. 6. For this embodiment of the present invention, a concept similar to a bearer may be defined in the WLAN to better distribute a data stream to the WLAN link and an LTE link.

For example, the bearer in the WLAN may be defined by using the following methods:
Method 1. Define several values in Class of 802.2SNAP, where the values correspond to bearer identifiers (Bearer ID) in the LTE one by one.
Method 2. Define several values in DSAP and SSAP of 802.2 LLC, where the values correspond to bearer identifiers (Bearer ID) in the LTE one by one.

### Embodiment 8: First method for data stream shaping

In Embodiment 8, an objective of data stream shaping is to solve a problem of disorder caused by separately transmitting an IP data packet on an LTE link and a WLAN link in Embodiment 6.

An IP data packet is distributed by a "data distribution/aggregation" module and then transmitted on the LTE link and the WLAN link separately. Technical features of a WLAN are different from that of an LTE. Therefore, a delay of transmission of the IP data packet on the WLAN link may be different from that on the LTE link. As a result, after a certain determined IP data stream is transmitted through two RATs, disorder is caused at a receiving end. The disorder may affect TCP transmission, for example, causing retransmission of a TCP packet and congestion control at a TCP source end.

The method for data stream shaping provided by Embodiment 8 is described as follows:
The "data distribution/aggregation" module performs distribution according to a data stream:
   1) If a Protocol ID in a header of an IP data packet is UDP, a data stream may be randomly distributed to the WLAN link and the LTE link; and
   2) if a Protocol ID in a header of an IP packet is TCP, each data stream needs to be distributed to a certain determined RAT, and a data stream is represented by a quintet.

In Embodiment 6, if a same data stream is transmitted in a same RAT, its sequence is ensured. However, in this case, a benefit of distribution is lost.

The "data distribution/aggregation" module may also perform distribution according to a bearer.

At present, a data stream in the LTE is definitely borne on a certain determined bearer. In this case, if a bearer is scheduled, a determined data stream is distributed to a determined RAT.

The method for data stream shaping provided in Embodiment 8 is capable of avoiding problems of TCP retransmission and flow control. However, a data stream is bound to a same bearer, so that many advantages of the present invention are lost.

### Embodiment 9: Second method for data stream shaping

In Embodiment 9, an objective of data stream shaping is still to solve a problem of disorder caused by separately transmitting an IP data packet on an LTE link and a WLAN link in Embodiment 6.

It has been described above that the disorder caused by separately transmitting the IP data packet on the LTE link and the WLAN link causes problems of TCP retransmission and flow control. Characteristics of TCP retransmission are described as follows:
1) When receiving a data packet whose SN is greater than an expected value, a receiving end instantly returns an ACK (an acknowledgment information frame), where the ACK carries an expected SN; and
2) when consecutively receiving 3 ACKs carrying a same SN, a source end considers that retransmission is required and performs congestion control.

In Embodiment 9, a method may be designed during distribution according to the characteristics of the TCP retransmission to prevent the receiving end from consecutively sending 3 ACKs to the source end. The method is specifically as follows:
For a same data stream, a "data distribution/aggregation" module does not consecutively send more than 2 data packets in a same RAT, for example:
   I. separately sending one or two data packets on the LTE link and the WLAN link first;
   II. continuing to send a data packet in an RAT where the data packet has been sent successfully; and
   III. if two data packets have been sent in a certain RAT, while a data packet fails to be sent in the other RAT, the data packet that fails to be sent in the other RAT is resent in the RAT where the data packets are sent successfully.

The method for data stream shaping provided in Embodiment 9 is capable of avoiding the problems of TCP retransmission and flow control, and does not need to bind a same data stream to a same bearer.

### Embodiment 10: Third method for data stream shaping

What is different from Embodiment 8 and Embodiment 9 is that, in Embodiment 10, disorder is allowed on a WLAN link and an LTE link. A receiving end performs sequencing before forwarding an IP data packet to an upper layer. The sequencing needs to be performed on a basis, and this basis is a sequence number SN. The method in Embodiment 10 is specifically described as follows:
1) When receiving IP data packets and performing distribution, a "data distribution/aggregation" module marks each of the IP data packets with an SN;
2) the IP data packets marked with SNs are transmitted to a network side (for example, an eNB) on the WLAN link and the LTE link. A "data distribution/aggregation" module on the network side (for example, the eNB) performs sequencing according to the SN of each of the IP data packets, and then sends the IP data packets to the upper layer;
3) on an actual network, there are many protocols with SNs, for example, PDCP and GTPU. A simplest protocol may be selected, and even a simple protocol layer may be customized; and
4) regarding setting of SNs, these IP data packets are transmitted in an LTE/SAE core network by using GTPU tunnels, and a GTPU header actually includes an SN of an GTPU; therefore, the network side (for example, the eNB) may mark the IP data packets according to SNs and TEIDs of these GTPUs.

The method for data stream shaping provided in Embodiment 9 is capable of avoiding problems of TCP retransmission and flow control with a minor impact on distribution.

### Embodiment 11: First supported scheduling algorithm for distribution on a WLAN link and an LTE link for a data stream

As shown in FIG. 4 and FIG. 5, in this embodiment of the present invention, a "data stream distribution/aggregation" module may distribute a same data stream to different RATs, and may also receive and aggregate a data stream from different RATs. Distribution performed by the "data stream distribution/aggregation" module for the data stream may be controlled by a certain scheduling algorithm. For flexibility, various scheduling algorithms are supported in this embodiment of the present invention as far as possible. However, any scheduling algorithm requires the following two types of input information:
1) scheduling policy information; and
2) scheduling feedback information.

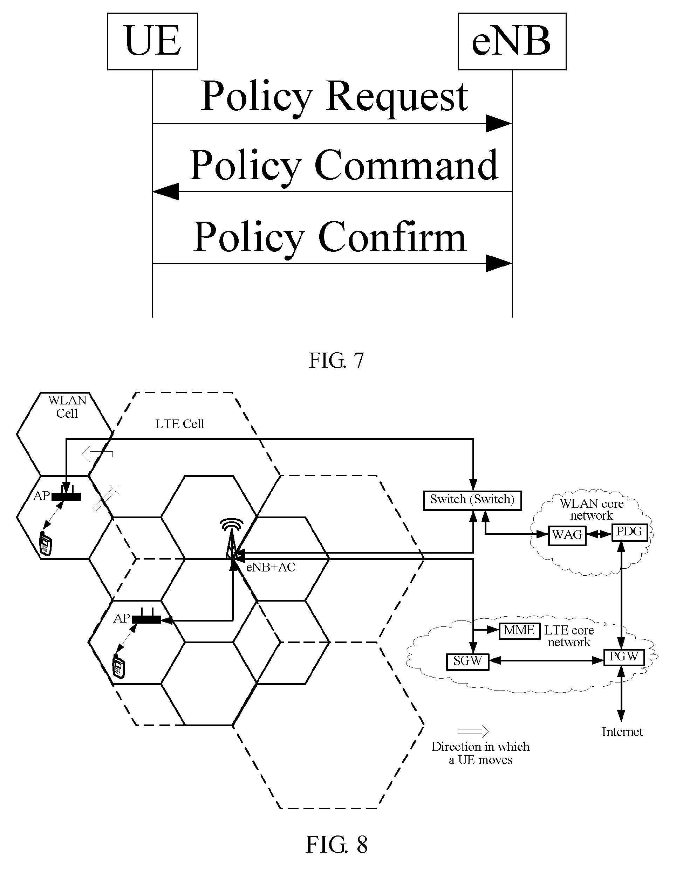

In this embodiment of the present invention, a network side (for example, an eNB) may formulate a scheduling policy. A UE performs scheduling policy negotiation with the network side (for example, the eNB) to acquire the scheduling policy. For a specific process of negotiating the scheduling policy, reference may be made to FIG. 7, including:
A. The UE sends a scheduling policy negotiation request message (Policy Request) to the network side (for example, the eNB);
B. the UE receives a policy command (Policy Command) returned by the network side (for example, the eNB), where the policy command carries the scheduling policy; and
C. the UE acquires the scheduling policy and sends a scheduling policy negotiation confirmation message (Policy Confirm) to the network side (for example, the eNB).

### Embodiment 12: Second supported scheduling algorithm for distribution on a WLAN link and an LTE link for a data stream

In Embodiment 12, which scheduling feedback information needs to be acquired by a "data stream distribution/aggregation" module and how to acquire the scheduling feedback information are specified.

The "data stream distribution/aggregation" module may acquire the scheduling feedback information from air interfaces of the LTE link and the WLAN link for a scheduling algorithm to use. Specifically:
1) "Data stream distribution/aggregation" modules in a UE and a network side (for example, an eNB) may acquire the scheduling feedback information from an air interface of the WLAN link, where the scheduling feedback information may include but is not limited to the following information:
   I. data volume in a buffer;
   II. retransmission information, such as the number of times of retransmission of a certain data packet, and a probability of retransmission; and
   III. duration for transmitting a data packet on the WLAN link (optional).
2) The "data stream distribution/aggregation" modules in the UE and the network side (for example, the eNB) may acquire the scheduling feedback information from an air interface of the LTE link, where the scheduling feedback information may include:
   I. data volume in a buffer; and
   II. retransmission information.

In this embodiment of the present invention, the acquisition of the scheduling feedback information requires interfaces between a "data stream distribution/aggregation" module and an LTE air interface protocol stack and between the "data stream distribution/aggregation" module and a WLAN air interface protocol stack, which are easy to be implemented. For the UE, adding an interface with an air interface protocol stack may increase difficulty of commercialization. However, this does not affect implementation of this embodiment of the present invention.

### Embodiment 13: Examples of specific scheduling algorithms

In this embodiment of the present invention, after a UE and a network side (for example, an eNB) acquires scheduling policy information and scheduling feedback information, a "data stream distribution/aggregation" may perform distribution on a same data stream according to a scheduling algorithm. There may be various kinds of specific scheduling algorithms. In Embodiment 13, the following examples are illustrated:
1) First scheduling algorithm: performing distribution according to a data stream.
   That is, perform distribution on an IP packet by analyzing a header of each received IP data packet and matching a scheduling policy.
2) Second scheduling algorithm: performing distribution according to a bearer.
   That is, distribute a data packet on each different bearer to a corresponding RAT according to a scheduling policy.
3) Third scheduling algorithm: adjusting distribution according to feedback.
   I. Signaling and a VoIP data packet are transmitted on an LTE link to ensure quality of service;
   II. a data packet that does not support a WLAN can be transmitted only on the LTE link;
   III. a packet is lost on a WLAN link, the packet is retransmitted on the LTE link; and if a packet is lost on the LTE link, the data packet is retransmitted on the WLAN link; or the data packet is retransmitted on both RATs at the same time;
   IV. the retransmission affects a distribution ratio of a data packet in the two RATs. For example, if retransmission occurs many times on the WLAN link, a data packet is distributed to the LTE link as far as possible; and vice versa; and
   V. buffers in the two RATs affects the distribution ratio of the data packet in the two RATs. For example, the fuller a buffer of a certain RAT is, the lower a probability of distribution in the RAT is.
4) Fourth scheduling algorithm: hybrid scheduling algorithm.

In this embodiment, a rule of the third scheduling algorithm may be applied to the first scheduling algorithm and the second scheduling algorithm. For example, retransmission and a size of a buffer affect bearer allocation or allocation of a data stream in the two RATs.

In this embodiment of the present invention, another scheduling algorithm may also be adopted to perform distribution on a data stream, which is not limited in this embodiment of the present invention.

### Embodiment 14: First method for establishing a link to a WLAN core network

The foregoing embodiments may form a complete technical solution to implement the present invention. However, in consideration of the following two scenarios, the present invention is supplemented:
Scenario 1. Provide access to a WLAN for a non-LTE user. In this case, the user cannot use an LTE core network.
Scenario 2. Coverage of the WLAN is different from that of the LTE network. In this case, service continuity needs to be maintained when a user roams between different coverage.

In view of this, the following network deployment is established:
A WLAN core network is deployed and an AC integrated in an eNB is connected to the WLAN core network.

A working procedure is as follows:
1) When initiating WLAN authentication, a UE directly connects to an AAA through the AC integrated in the eNB. Then authentication is performed on the UE;
2) after the authentication is successful, if the UE has established a link in the LTE network, perform distribution by using the LTE link and a WLAN link; and
3) transmit a data stream according an existing WLAN transmission manner if the UE has not established a link in the LTE network.

When the UE moves from the WLAN to an area covered by both the WLAN and the LTE network, as shown in FIG. 8, the following processing may be performed:
1) After the UE moves to an area covered by both the WLAN and the LTE network, the UE may detect LTE coverage and initiate an LTE attachment (Attach);
2) the movement of the UE may cause a change of a WLAN AP, and an AC of a new AP is integrated in the eNB. That is, the movement of the UE causes a change of the AC. As a result, authentication is performed again in the WLAN; and
3) no matter whether a link is successfully established in the LTE network or in the WLAN, after the link is successfully established, the eNB needs to scan a database to determine whether the UE has two RATs. If two RATs exist, it means that distribution needs to be performed in the eNB for a data stream.

When the UE moves from the area covered by both the WLAN and the LTE to an area covered only by the WLAN, as shown in FIG. 8, the following processing may be performed:
1) For the UE, an RLF or detachment may occur in the LTE, resulting in a broken link;
2) if no WLAN handover occurs at this time, all data streams are migrated to the WLAN, and data streams at the network side are also directly migrated to the WLAN core network through the AC; and
3) if an AP handover occurs and the new AP directly connects to the WLAN core network, data streams are directly migrated to the WLAN.

In the figure, dashed lines indicate LTE Cells, while solid lines indicate WLAN Cells.

### Embodiment 15: Second method for establishing a link to a WLAN core network

In Embodiment 14, an AC integrated in an eNB directly connects to a WLAN core network. Coverage of one eNB is relatively small. Therefore, network deployment in Embodiment 14 may cause a problem that frequent authentication may be caused when a UE moves. A concept of two-level AC is introduced in Embodiment 15 to solve this problem, that is:
1) The AC integrated in the eNB is regarded as a second-level AC;
2) an AC located on an edge of a metropolitan area network serves as a first-level AC; and
3) the second-level AC serves as a proxy (Proxy) of the first-level AC and stores an authentication result.

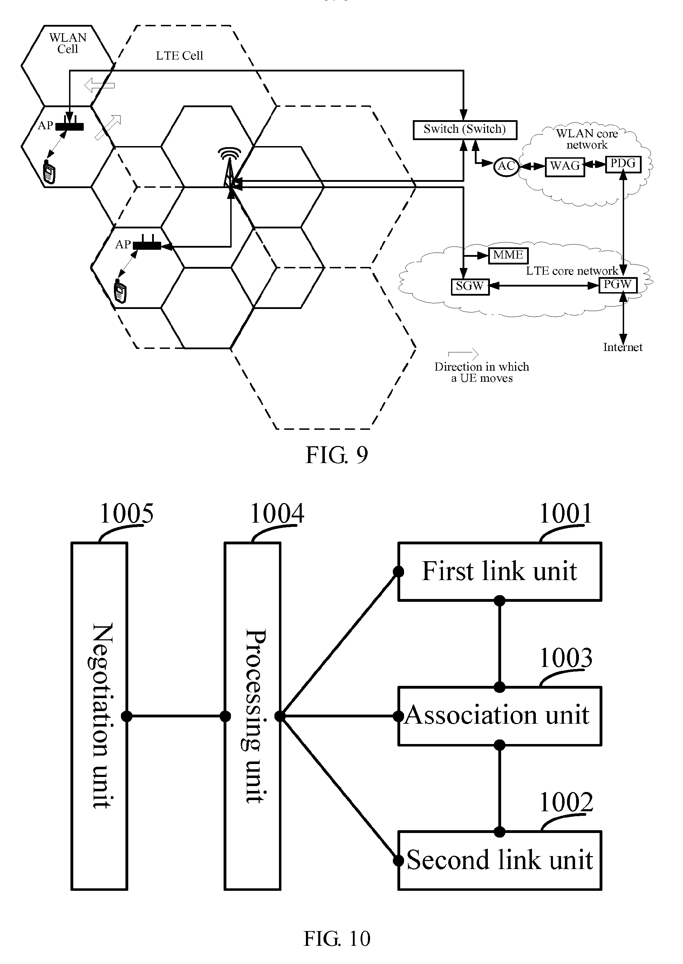

When the UE moves from a WLAN to an area covered by both the WLAN and an LTE network, as shown in FIG. 9, the following processing may be performed:
1) When the UE moves to an area covered by both the WLAN and the LTE, the UE may detect LTE coverage and initiate an LTE attachment;
2) the movement of the UE may cause a change of a WLAN AP, and a new AP is an AP served by the eNB; therefore, the UE may initiate a WLAN re-association procedure (Re-association Procedure) to update the WLAN AP. The UE has not registered with the AC in the eNB; therefore, the AC needs to forward a Re-association Request message to an upper-level AC for processing. If the processing by the upper-level AC is successful, it may indicate that the authentication is successful;
3) no matter whether a link is successfully established in the LTE network or in the WLAN, after the link is successfully established, the eNB needs to scan a database to determine whether the UE has two RATs; and
4) if two RATs exist, it means that distribution needs to be performed in the eNB for a data stream. In this case, the eNB deregisters the UE from the first-level AC.

In the figure, dashed lines indicate LTE Cells, while solid lines indicate WLAN Cells.

When the UE moves from the area covered by both the WLAN and the LTE network to an area covered only by the WLAN, as shown in FIG. 9, the following processing may be performed:
1) For the UE, an RLF or detachment may occur in the LTE network, resulting in a broken link; and
2) the UE selects a new AP, reinitiates a WLAN link establishment process, and migrates a data stream to a new WLAN for transmission if a link is successfully established.

Referring to FIG. 10, FIG. 10 is a schematic structural diagram of a user equipment according to an embodiment of the present invention, for implementing functions of the foregoing UE. The user equipment may include:
a first link unit 1001, configured to establish a first network link with an eNB;
a second link unit 1002, configured to establish a second network link with the eNB, where the first network is different from the second network;
an association unit 1003, configured to associate the first network link with the second network link; and
a processing unit 1004, configured to distribute, according to a scheduling algorithm, a same data stream to the first network link and the second network link for transmission.

The processing unit 1004 is capable of implementing a function of the "data stream distribution/aggregation" module on the foregoing UE.

As shown in FIG. 10, the user equipment may include a negotiation unit 1005, where the negotiation unit 1005 is configured to negotiate a scheduling policy with the eNB. Accordingly, the processing unit 1004 may distribute, according to a negotiation result of the negotiation unit 1005 and the scheduling algorithm, a same data stream to the first network link and the second network link for transmission.

The association unit 1003 and the negotiation unit 1005 may be combined for an optimized design to form a control unit, configured to implement functions of the association unit 1003 and the negotiation unit 1005.

For example, the first network and the second network may be a WLAN and an LTE network respectively.

Accordingly, the association unit 1003 may specifically associate the first network link with the second network link according to a WLAN MAC Address that corresponds to the first network link and a C-RNTI and a Cell ID that correspond to the second network link.

Alternatively, the association unit 1003 may specifically associate the first network link with the second network link according to a user ID that corresponds to the first network link and a user ID that corresponds to the second network link, where the user ID that corresponds to the first network link is the same as the user ID that corresponds to the second network link.

For example, the negotiation unit 1005 may specifically send a scheduling policy negotiation request message to a network side, and receives a policy command returned by the network side, where the policy command carries a scheduling policy; and acquires the scheduling policy, and sends a scheduling policy negotiation confirmation message to the network side. In this way, scheduling policy negotiation is implemented between the UE and the network side.

As an optional implementation manner, the distributing, by the processing unit 1004 and according to the negotiation result of the negotiation unit 1005 and the scheduling algorithm, the same data stream to the first network link and the second network link may be performed at a MAC layer.

As another optional implementation manner, the distributing, by the processing unit 1004 and according to the negotiation result of the negotiation unit 1005 and the scheduling algorithm, the same data stream to the first network link and the second network link may be performed at an IP layer.

As an optional implementation manner, after distributing the same data stream at the IP layer, the processing unit 1004 may mark each IP data packet with an SN, so that after receiving an IP data packet, the network side is capable of performing sequencing according to the SN of the IP data packet, thereby avoiding problem of disorder caused by separately transmitting an IP data packet on an LTE link and a WLAN link.

In this embodiment of the present invention, the first link unit 1001 and the second link unit 1002 may establish the first network link and the second network link with the network side respectively, where the first network is different from the second network; the association unit 1003 may associate the first network link with the second network link, and the negotiation unit 1004 may negotiate the scheduling policy with the network side; then the processing unit 1005 may distribute, according to the negotiation result and the scheduling algorithm, the same data stream to the first network link and the second network link for transmission. In this embodiment of the present invention, hybrid transmission of a same data stream may be implemented in different networks. Compared with an existing solution, in this embodiment of the present invention, distribution may be performed more flexibly, and particularly, when a load of a certain network link is relatively high or many packets are lost in a certain network link, the same data stream may be distributed to another network link for transmission. In addition, in this embodiment of the present invention, when a packet is lost in a certain network link, another network link may also be used for retransmission, thereby greatly improving a quality of service assurance.

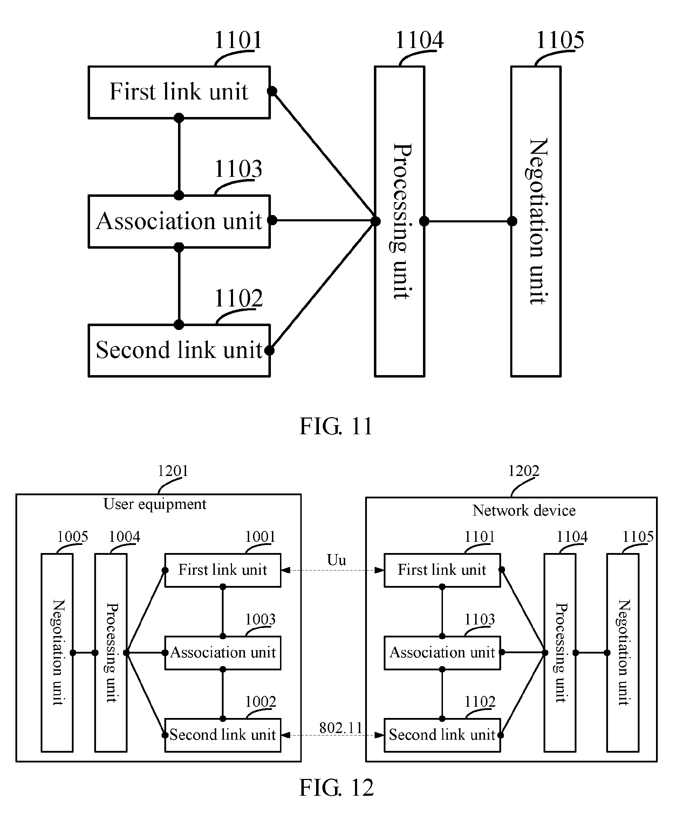

Referring to FIG. 11, FIG. 11 is a schematic structural diagram of a network device according to an embodiment of the present invention. The network device provided in this embodiment of the present invention may be applied to a device such as a base station and a base station controller, which is not limited in this embodiment of the present invention. The base station may include:
a first link unit 1101, configured to establish a first network link with a UE;
a second link unit 1102, configured to establish a second network link with the UE, where the first network is different from the second network;
an association unit 1103, configured to associate the first network link with the second network link; and
a processing unit 1104, configured to receive and aggregate a same data stream that is distributed by the UE to the first network link and the second network link for transmission.

The processing unit 1104 is capable of implementing a function of the "data stream distribution/aggregation" module on the foregoing network side.

As shown in FIG. 11, the network device may further include a negotiation unit 1105, configured to negotiate a scheduling policy with the UE. The association unit 1103 and the negotiation unit 1105 may be combined for an optimized design to form a control unit, configured to implement functions of the association unit 1103 and the negotiation unit 1105.

For example, the first network and the second network may be a WLAN and an LTE network respectively.

Accordingly, the association unit 1103 may specifically associate the first network link with the second network link according to a WLAN MAC Address that corresponds to the first network link and a C-RNTI and a Cell ID that correspond to the second network link.

Alternatively, the association unit 1103 may specifically associate the first network link with the second network link according to a user ID that corresponds to the first network link and a user ID that corresponds to the second network link, where the user ID that corresponds to the first network link is the same as the user ID that corresponds to the second network link.

For example, the negotiation unit 1105 may specifically receive a scheduling policy negotiation request message sent by the UE, and return a policy command to the UE, where the policy command carries the scheduling policy.

As an optional implementation manner, the UE distributes, at a MAC layer, the same data stream to the first network link and the second network link for transmission.

As another optional implementation manner, the UE distributes, at an IP layer, the same data stream to the first network link and the second network link for transmission.

As an optional implementation manner, after distributing the same data stream at the IP layer, the UE may mark each IP data packet with an SN, so that after receiving an IP data packet, the network side is capable of performing sequencing according to the SN of the IP data packet, thereby avoiding a problem of disorder caused by separately transmitting an IP data packet on an LTE link and a WLAN link.

In this embodiment of the present invention, the first link unit 1101 and the second link unit 1102 may establish the first network link and the second network link with the UE respectively, where the first network is different from the second network; the association unit 1103 may associate the first network link with the second network link, and the negotiation unit 1105 may negotiate the scheduling policy with the UE; then the processing unit 1104 may receive and aggregate the same data stream that is distributed by the UE to the first network link and the second network link for transmission. Compared with an existing solution, in this embodiment of the present invention, distribution may be performed more flexibly, and particularly, when a load of a certain network link is relatively high or many packets are lost in a certain network link, the same data stream may be distributed to another network link for transmission. In addition, in this embodiment of the present invention, when a packet is lost in a certain network link, another network link may also be used for retransmission, thereby greatly improving a quality of service assurance.

Referring to FIG. 12, FIG. 12 is a schematic structural diagram of a data stream transmission system according to an embodiment of the present invention, for implementing the data stream transmission method provided in the embodiment of the present invention. The system may include a user equipment 1201 and a network device 1202.

As shown in FIG. 12, a structure of the user equipment 1201 is the same as that of the user equipment shown in FIG. 10; and a structure of the network device 1202 is the same as that of the network device shown in FIG. 11.

As shown in FIG. 12, a Uu interface indicates that an LTE link is established between a first link unit 1001 of the user equipment 1201 and a first link unit 1101 of the network device 1202; and an 802.11 interface indicates that a WLAN link is established between a second link unit 1002 of the user equipment 1201 and a second link unit 1102 of the network device 1202.

In this embodiment of the present invention, an execution process of the user equipment 1201 in an uplink direction is similar to that of the network device 1202 in a downlink direction. In addition, an execution process of the user equipment 1201 in a downlink direction is similar to that of the network device 1202 in an uplink direction. Details are not described in this embodiment of the present invention.

According to the user data transmission system provided in this embodiment of the present invention, distribution may be performed more flexibly, and particularly, when a load of a certain network link is relatively high or many packets are lost in a certain network link, the same data stream may be distributed to another network link for transmission. In addition, in this embodiment of the present invention, when a packet is lost in a certain network link, another network link may also be used for retransmission, thereby greatly improving a quality of service assurance.

In addition, the user data transmission system provided in this embodiment of the present invention requires only function extension on a UE and a network side (for example, an eNB). Therefore, a total construction cost is low and a construction period is short.

The data stream transmission methods described in the embodiments of the present invention are all based on hybrid transmission on an LTE link and a WLAN link. As an optional implementation manner, the data stream transmission method provided in this embodiment of the present invention may also be based on hybrid transmission of a universal mobile telecommunications system terrestrial radio access network (Universal Mobile Telecommunications System Terrestrial Radio Access Network, UTRAN) link and a WLAN link. That is, the first network may be a WLAN, and the second network may be a UTRAN.

Accordingly, when the first network is the WLAN, and the second network is the UTRAN, authentication performed on the UE in the WLAN is the same as Embodiment 1 to Embodiment 4; a method of data stream distribution is the same as Embodiment 5 and Embodiment 6; a method for data stream shaping is the same as Embodiment 8 to Embodiment 10; a method for data stream scheduling is the same as Embodiment 11 to Embodiment 13; and a network deployment method is the same as Embodiment 14 and Embodiment 15. Therefore, details are not provided in this embodiment of the present invention.

A person skilled in the art may understand that all or part of the steps of the methods in the embodiments may be implemented by a program instructing relevant hardware. The program may be stored in a computer readable storage medium, and the storage medium may include: a flash drive, a read-only memory (Read-Only Memory, ROM), a random access memory (Random Access Memory, RAM), a magnetic disk, an optical disk, and so on.

The foregoing describes in detail the data stream transmission method, system, and device provided in the embodiments of the present invention. Specific cases are used for illustrating principles and implementation manners of the present invention. The foregoing description about the embodiments is merely used to help understanding of the methods and core ideas of the present invention. Meanwhile, a person skilled in the art may make modifications to the specific implementation manners and application scopes according to the idea of the present invention. In conclusion, the content of this specification should not be construed as a limitation to the present invention.

## Claims

1. A data stream transmission method, comprising:
establishing a first network link and a second network link with a user equipment, wherein the first network is different from the second network;
associating the first network link with the second network link; and
receiving and aggregating a same data stream that is distributed by the user equipment to the first network link and the second network link for transmission.

2. The method according to claim 1, wherein the first network and the second network are a wireless local area network WLAN and a long term evolution network respectively.

3. The method according to claim 2, wherein the associating the first network link with the second network link comprises:
associating the first network link with the second network link according to a wireless local area network media access control address that corresponds to the first network link and a cell radio network temporary identifier and a cell identifier that correspond to the second network link.

4. The method according to claim 2, wherein the associating the first network link with the second network link comprises:
associating the first network link and the second network link according to a user identifier that corresponds to the first network link and a user identifier that corresponds to the second network link, wherein the user identifier that corresponds to the first network link is the same as the user identifier that corresponds to the second network link.

5. The method according to any one of claims 1 to 4, further comprising:
negotiating a scheduling policy with the user equipment, wherein
the negotiating the scheduling policy with the user equipment comprises:
receiving a scheduling policy negotiation request message sent by the user equipment; and
returning a policy command to the user equipment, wherein the policy command carries the scheduling policy.

6. The method according to any one of claims 1 to 5, wherein the user equipment distributes, at a media access control layer, the same data stream to the first network link and the second network link for transmission.

7. The method according to any one of claims 1 to 5, wherein the user equipment distributes, at an Internet protocol layer, the same data stream to the first network link and the second network link for transmission.

8. The method according to claim 7, wherein each Internet protocol data packet that is distributed by the user equipment to the first network link and the second network link for transmission is marked with a sequence number.

9. The method according to claim 1, wherein the first network and the second network are a wireless local area network WLAN and a universal mobile telecommunications system terrestrial radio access network UTRAN respectively.

10. A data stream transmission method, comprising:
establishing, by a user equipment, a first network link and a second network link with a network side, wherein the first network is different from the second network;
associating, by the user equipment, the first network link with the second network link; and
distributing, by the user equipment and according to a scheduling algorithm, a same data stream to the first network link and the second network link for transmission.

11. The method according to claim 10, wherein the first network and the second network are a wireless local area network WLAN and a long term evolution network respectively.

12. The method according to claim 1l, wherein the associating, by the user equipment, the first network link with the second network link comprises:
associating, by the user equipment, the first network link with the second network link according to a wireless local area network media access control address that corresponds to the first network link and a cell radio network temporary identifier and a cell identifier that correspond to the second network link.

13. The method according to claim 11, wherein the associating, by the user equipment, the first network link with the second network link comprises:
associating, by the user equipment, the first network link and the second network link according to a user identifier that corresponds to the first network link and a user identifier that corresponds to the second network link, wherein the user identifier that corresponds to the first network link is the same as the user identifier that corresponds to the second network link.

14. The method according to any one of claims 10 to 13, further comprising:
negotiating, by the user equipment, a scheduling policy with the network side; wherein
the distributing, by the user equipment and according to the scheduling algorithm, the same data stream to the first network link and the second network link for transmission comprises:
distributing, by the user equipment and according to a negotiation result and the scheduling algorithm, the same data stream to the first network link and the second network link for transmission.

15. The method according to claim 14, wherein the negotiating, by the user equipment, the scheduling policy with the network side comprises:
sending, by the user equipment, a scheduling policy negotiation request message to the network side;
receiving, by the user equipment, a policy command returned by the network side, wherein the policy command carries the scheduling policy; and
acquiring, by the user equipment, the scheduling policy, and sending a scheduling policy negotiation confirmation message to the network side.

16. The method according to claim 14, wherein the distributing, according to the scheduling algorithm, the same data stream to the first network link and the second network link is performed at a media access control layer.

17. The method according to claim 14, wherein the distributing, according to the scheduling algorithm, the same data stream to the first network link and the second network link is performed at an Internet protocol layer.

18. The method according to claim 17, further comprising:
after distributing the same data stream, marking, by the user equipment, each Internet protocol data packet with a sequence number.

19. The method according to claim 10, wherein the first network and the second network are a wireless local area network WLAN and a universal mobile telecommunications system terrestrial radio access network UTRAN respectively.

20. A network device, comprising:
a first link unit, configured to establish a first network link with a user equipment;
a second link unit, configured to establish a second network link with the user equipment, wherein the first network is different from the second network;
an association unit, configured to associate the first network link with the second network link; and
a processing unit, configured to receive and aggregate a same data stream that is distributed by the user equipment to the first network link and the second network link for transmission.

21. The network device according to claim 20, wherein the first network and the second network are a wireless local area network WLAN and a long term evolution network respectively.

22. The network device according to claim 21, wherein the association unit is configured to associate the first network link with the second network link according to a wireless local area network media access control address that corresponds to the first network link and a cell radio network temporary identifier and a cell identifier that correspond to the second network link.

23. The network device according to claim 21, wherein the association unit is configured to associate the first network link with the second network link according to a user identifier that corresponds to the first network link and a user identifier that corresponds to the second network link, wherein the user identifier that corresponds to the first network link is the same as the user identifier that corresponds to the second network link.

24. The network device according to any one of claims 20 to 23, further comprising:
a negotiation unit, configured to receive a scheduling policy negotiation request message sent by the user equipment, and return a policy command to the user equipment, wherein the policy command carries a scheduling policy.

25. The network device according to any one of claims 20 to 24, wherein the user equipment distributes, at a media access control layer, the same data stream to the first network link and the second network link for transmission.

26. The network device according to any one of claims 20 to 24, wherein the user equipment distributes, at an Internet protocol layer, the same data stream to the first network link and the second network link for transmission.

27. The network device according to claim 26, wherein each Internet protocol data packet that is distributed by the user equipment to the first network link and the second network link for transmission is marked with a sequence number.

28. The network device according to claim 20, wherein the first network and the second network are a wireless local area network WLAN and a universal mobile telecommunications system terrestrial radio access network UTRAN respectively.

29. A user equipment, comprising:
a first link unit, configured to establish a first network link with a network side;
a second link unit, configured to establish a second network link with the base station, wherein the first network is different from the second network;
an association unit, configured to associate the first network link with the second network link; and
a processing unit, configured to distribute, according to a scheduling algorithm, a same data stream to the first network link and the second network link for transmission.

30. The user equipment according to claim 29, wherein the first network and the second network are a wireless local area network WLAN and a long term evolution network respectively.

31. The user equipment according to claim 30, wherein the association unit is configured to associate the first network link with the second network link according to a wireless local area network media access control address that corresponds to the first network link and a cell radio network temporary identifier and a cell identifier that correspond to the second network link.

32. The user equipment according to claim 30, wherein the association unit is configured to associate the first network link with the second network link according to a user identifier that corresponds to the first network link and a user identifier that corresponds to the second network link, wherein the user identifier that corresponds to the first network link is the same as the user identifier that corresponds to the second network link.

33. The user equipment according to any one of claims 29 to 32, further comprising:
a negotiation unit, configured to negotiate a scheduling policy with the network side; wherein
the processing unit is configured to distributing, according to a negotiation result of the negotiation unit and the scheduling algorithm, the same data stream to the first network link and the second network link for transmission.

34. The user equipment according to claim 33, wherein the negotiation unit is configured to send a scheduling policy negotiation request message to the network side, and receive a policy command turned by the network side, wherein the policy command carries a scheduling policy; and acquire the scheduling policy, and send a scheduling policy negotiation confirmation message to the network side.

35. The user equipment according to claim 33, wherein the distributing, by the processing unit and according to the negotiation result of the negotiation unit and the scheduling algorithm, the same data stream to the first network link and the second network link is performed at a media access control layer.

36. The user equipment according to claim 33, wherein the distributing, by the processing unit and according to the negotiation result of the negotiation unit and the scheduling algorithm, the same data stream to the first network link and the second network link is performed at an Internet protocol layer.

37. The user equipment according to claim 36, wherein the processing unit is further configured to mark each Internet protocol data packet with a sequence number after distributing the same data stream.

38. The user equipment according to claim 29, wherein the first network and the second network are a wireless local area network WLAN and a universal mobile telecommunications system terrestrial radio access network UTRAN respectively.

39. A data stream transmission system, comprising the network device according to any one of claims 20 to 28, and the user equipment according to any one of claims 29 to 38.
